# EUROPÄISCHE PATENTSCHRIFT

(11) **EP 2 464 899 B1**
(45) Veröffentlichungstag und Bekanntmachung des Hinweises auf die Patenterteilung: **02.10.2013**
(21) Anmeldenummer: 10740664.7
(22) Anmeldetag: 10.08.2010
(51) Int. Cl.: F16H 57/08, F16H 57/04

(54) **BEFESTIGUNGSANORDNUNG EINES PLANETENRADBOLZENS**
FIXING ASSEMBLY FOR A PLANET WHEEL BOLT
ENSEMBLE DE FIXATION D'AXE DE SATELLITE

(30) Priorität: 13.08.2009 DE 102009028509
(43) Veröffentlichungstag der Anmeldung: 20.06.2012
(73) Patentinhaber: ZF Friedrichshafen AG, 88038 Friedrichshafen (DE)
(72) Erfinder: DOEPFERT, Hagen, 88131 Lindau (DE); KARSTENS, Tobias, 88074 Meckenbeuren (DE); MORLO, Ralf, 66126 Saarbrücken (DE)
(86) Internationale Anmeldenummer: PCT/EP2010/061568
(87) Internationale Veröffentlichungsnummer: WO 2011/018437

(56) Entgegenhaltungen:
- DE-A1-102008 007 644
- JP-A- 2000 046 159
- JP-A- 2000 081 115
- JP-U- 4 128 556
- JP-U- 61 157 750

## Beschreibung

Die Erfindung betrifft eine Befestigungsanordnung eines Planetenradbolzens eines Planetengetriebes, welcher durch eine Durchgangsbohrung in einem Planetenträger hindurch geführt ist und auf einem Außendurchmesser eine Lagerung eines Planetenrades trägt, wobei der Planetenradbolzen im Planetenträger zum Einen durch ein Haltemittel und zum Anderen über ein gemeinsam mit dem Planetenträger rotierendes Bauteil gegen axiale Verschiebung und Verdrehung relativ zum Planetenträger gesichert ist.

Bei Planetengetrieben müssen die, die Planetenräder im jeweiligen Planetenträger tragenden Planetenradbolzen gegenüber dem Planetenträger gegen Verdrehen und gegen axiales Wandern gesichert werden. Während dies bei Planetenträgern aus Stahl üblicherweise mittels einer Verstemmung bewerkstelligt wird, finden bei Planetenträgern aus Aluminium aufgrund der niedrigeren Festigkeit des Materials alternative Befestigungsanordnungen Anwendung.

Aus der DE 102 36 753 A1 ist eine Befestigungsanordnung eines Planetenradbolzens in einem Planetenträger bekannt, bei welcher der Planetenradbolzen durch eine Durchgangsbohrung im Planetenträger hindurch geführt ist und auf seinem Außendurchmesser eine Lagerung eines jeweils zugeordneten Planetentrades trägt. Im Bereich eines Endes des Planetenradbolzens ist des Weiteren eine umlaufende Nut vorgesehen, die ein Haltemittel in Form eines Drahtringes aufnimmt. Im Zusammenspiel mit einer, am Planetenträger im Bereich der Durchgangsbohrung ausgebildeten Abstufung wird durch den Drahtring eine axiale Verschiebung des Planetenradbolzens in eine Richtung unterbunden. Um auch ein axiales Wandern in die entgegengesetzte Richtung zu verhindern, nimmt der Planetenträger des Weiteren ein Bauteil in Form eines Federelements auf, das gemeinsam mit dem Planetenträger rotiert und mit einem radialen Schenkel in einen, am Ende des Planetenradbolzens ausgebildeten Absatz hineinragt. Mittels dieses Schenkels wird neben der Begrenzung einer axialen Verschiebung zudem auch eine Relativverdrehung des Planetenradbolzens relativ zum Planetenträger verhindert, indem der Schenkel hierbei mit einer Begrenzung des Absatzes in Umfangsrichtung in Kontakt tritt.

Eine Befestigungsanordnung des Standes der Technik weist jedoch den Nachteil auf, dass zum Ausbilden des Absatzes am Planetenradbolzen ein entsprechender axialer Bauraum vorzusehen ist und der Absatz zudem in einem zusätzlichen Bearbeitungsprozess, beispielsweise durch Fräsen, hergestellt werden muss. Des Weiteren wird durch die umlaufende Abstufung im Bereich der Durchgangsbohrung am Planetenträger die tragende Fläche für den Planetenradbolzen reduziert, weswegen sich die Lochlaibung in diesem Bereich entsprechend erhöht. Dies führt somit zu einer erneuten Vergrößerung des axialen Bauraumbedarfs.

Aus der JP 4 128556 U ist eine Befestigungsanordnung nach dem Oberbegriff des Anspruchs 1 bekannt.

Es ist daher die Aufgabe der vorliegenden Erfindung, eine Befestigungsanordnung eines Planetenradbolzens zu schaffen, für welche kein zusätzlicher axialer Bauraumbedarf vorzusehen ist und die hierbei gleichzeitig keine Schwächung der Planetenradbolzenaufnahme im Planetenträger oder des Planetenradbolzens selbst hervorruft.

Diese Aufgabe wird ausgehend vom Oberbegriff des Anspruchs 1 in Verbindung mit dessen kennzeichnenden Merkmalen gelöst. Die darauffolgenden, abhängigen Ansprüche geben jeweils vorteilhafte Weiterbildungen der Erfindung wieder.

Die Erfindung umfasst die technische Lehre, dass das Haltemittel zur Sicherung des Planetenradbolzens im Planetenträger durch ein längliches Sicherungselement gebildet ist, welches in einer, in Querrichtung ausgebildeten Ausnehmung des Planetenradbolzens platziert ist und mit zumindest einem Ende in eine je korrespondierende Tasche des Planetenträgers ragt. Mittels einer derartigen Ausgestaltung des Haltemittels kann eine axiale Sicherung, sowie Fixierung in Verdrehrichtung ohne eine Verlängerung des Planetenradbolzens erfolgen. Des Weiteren zeichnet sich diese Art der Sicherung durch eine geringe Beeinträchtigung der Steifigkeit des Planetenträgers im Bereich der Durchgangsbohrung zur Aufnahme des Planetenradbolzens aus, da anstatt einer umlaufenden Abstufung am Planetenträger nur eine Tasche zur Aufnahme des zumindest einen Endes des länglichen Sicherungselements vorzusehen ist. Schließlich kann die Fertigung der Tasche am Planetenträger mit gröberen Toleranzen erfolgen, was den Fertigungsaufwand der erfindungsgemäßen Befestigungsanordnung weiter vermindert.

Gemäß einer nicht beanspruchten Ausführungsform ist die Ausnehmung durch eine Querbohrung im Planetenradbolzen gebildet, wobei das längliche Sicherungselement ein Stift oder eine Spannhülse ist. Dies hat den Vorteil, dass zur Fertigung der Querbohrung dasselbe Werkzeug herangezogen werden kann, das auch zum Ausbilden von Schmierbohrungen im Planetenradbolzen verwendet wird, was eine weitere Verminderung des Herstellungsaufwandes mit sich bringt. Bei Verwendung einer Spannhülse kann die Montage des Sicherungselements vereinfacht werden, da während des Zusammensetzens die Gefahr eines Herausfallens aus der Querbohrung stark vermindert ist. Die alternative Verwendung eines Stifts hat den Vorteil, dass die Anforderungen an die Fertigungstoleranzen zur Ausbildung des Durchmessers der Querbohrung niedriger sind.

Entsprechend der Ausführungsform der Erfindung ist die Ausnehmung eine, an einem axialen Ende des Planetenradbolzens ausgebildete Nut, wobei das hierin platzierte, längliche Sicherungselement eine Platte mit einem trapezförmigen Querschnitt ist, die mit der Nut eine Schwalbenschwanzverbindung ausbildet. Vorteilhafterweise kann hierdurch die Sicherung des Planetenradbolzens direkt in dessen Endbereich gelegt werden, wodurch die Tasche am Planetenträger in axialer Richtung deutlich kürzer ausgeführt werden kann.

In Weiterbildung der Erfindung ist die Tasche des Planetenträgers an einer Stelle des Umfangs der Durchgangsbohrung vorgesehen, an welcher eine Belastung des Planetenträgers am geringsten ist. Hierdurch kann der Einfluss der Befestigungsanordnung auf die Planetenträgersteifigkeit deutlich minimiert werden.

Es ist eine Ausführungsform der Erfindung, dass das gemeinsam mit dem Planetenträger rotierende Bauteil ein, im Bereich des Planentenradbolzens vorgesehenes Ölfangblech ist. Durch diese Maßnahme wird neben einer axialen Sicherung des Planetenradbolzens auch eine Zuführung von Schmiermittel zu den Schmierbohrungen und damit eine Versorgung der jeweiligen Lagerung des Planetenrades sichergestellt.

Weitere, die Erfindung verbessernde Maßnahmen werden nachstehend gemeinsam mit der Beschreibung bevorzugter Ausführungsformen der Erfindung anhand der Figuren näher dargestellt.

Es zeigt:
- Fig.1A-1B: Schnittansichten der Befestigungsanordnung gemäß einer nicht beanspruchten, ersten Ausführungsform; und
- Fig.2A-2C: Schnittansichten der Befestigungsanordnung gemäß einer zweiten, erfindungsgemäßen Ausführungsform.

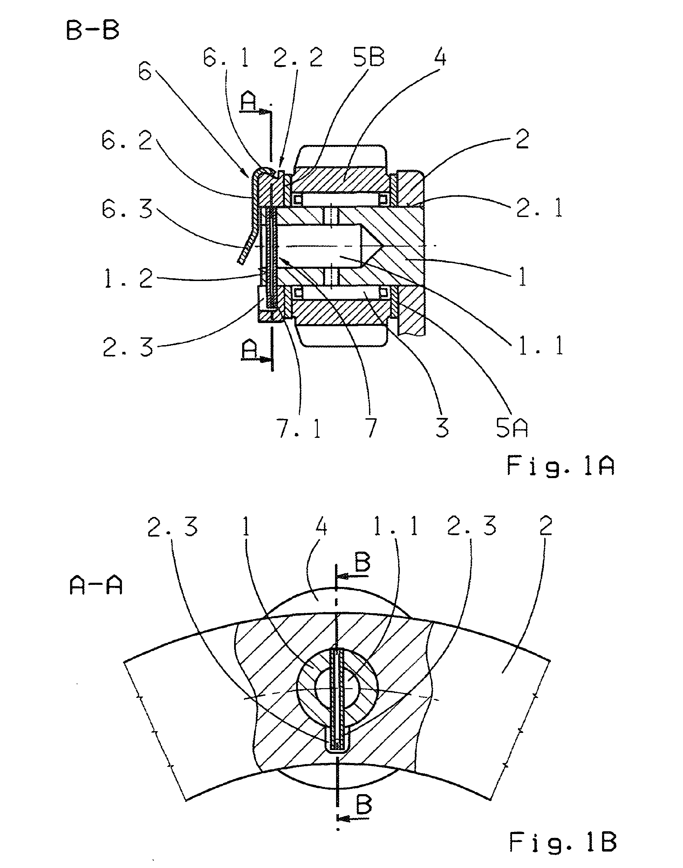

In den Fig. 1A und 1B sind Schnittansichten der Befestigungsanordnung gemäß einer nicht beanspruchten, ersten Ausführungsform zu sehen. Wie insbesondere aus dem Längsschnitt in Fig. 1A hervorgeht, ist hierbei ein Planetenradbolzen 1 durch eine Durchgangsbohrung 2.1 in einem Planetenträger 2 hindurchgeführt und führt auf seinem Außendurchmesser eine Lagerung 3 eines Planetenrades 4. Das Planetentrad 4 kann dabei über die Lagerung 3, sowie über, in axialer Richtung beiderseits platzierte Anlaufscheiben 5A und 5B eine Drehbewegung bezüglich des Planetenträgers 2 ausführen. Um allerdings auch eine Verdrehung, sowie ein axiales Wandern des Planetenradbolzens 1 bezüglich des Planetenträgers 2 zu verhindern, ist zum Einen ein, gemeinsam mit dem Planetenträger 2 rotierendes Federelement in Form eines Ölfangblechs 6 und zum Anderen eine Spannhülse 7 vorgesehen.

Das Ölfangblech 6 fasst mit einem oberen Ende 6.1 in eine Hinterhakungsmöglichkeit 2.2 am Planetenträger 2 und verhindert mit einem radialen Abschnitt 6.2 eine, in Richtung des Ölfangblechs 6 gewandte, axiale Bewegung des Planetenradbolzens 1. Des Weiteren weist das Ölfangblech 6 einen Schenkel 6.3 auf, über welchen aufgefangenes Öl in eine Schmierbohrung 1.1 des Planetenradbolzens 1 zur Schmiermittelversorgung der Lagerung 3 des Planetenrades 4 geleitet werden kann.

Die Spannhülse 7 ist in einer Querbohrung 1.2 des Planetenradbolzens 1 platziert und ragt mit einem Ende 7.1 in eine hierzu korrespondierende Tasche 2.3 des Planetenträgers 2. Dabei unterbindet ein, durch das Ende 7.1 und die Tasche 2.3 ausgebildeter Formschluss eine vom Ölfangblech 6 weggerichtete, axiale Bewegung, sowie eine Verdrehung des Planetenradbolzens 1 relativ zum Planetenträger 2, was insbesondere aus dem Querschnitt in Fig.1 B hervorgeht. Die Tasche 2.3 ist hierbei an einer Stelle des Umfangs der Durchgangsbohrung 2.1 vorgesehen, an welcher die Belastung des Planetenträgers 2 am Geringsten ist. In diesem Fall ist dies der innenradiale Bereich des Planetenträgers 2. Dabei reicht eine Fertigung der Tasche 2.3 mit gröberen Toleranzen aus, um die Sicherungsaufgaben übernehmen zu können.

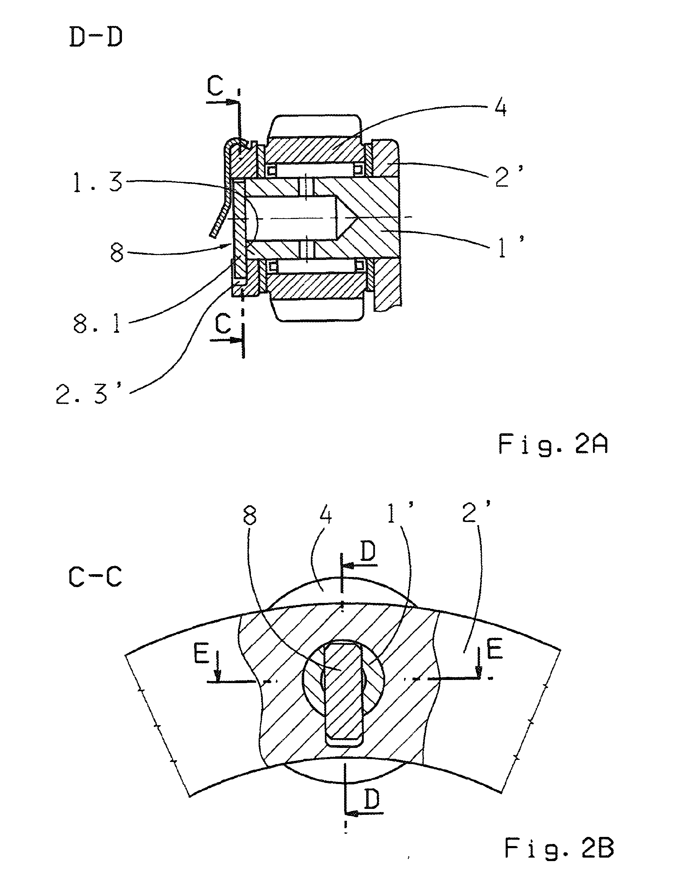

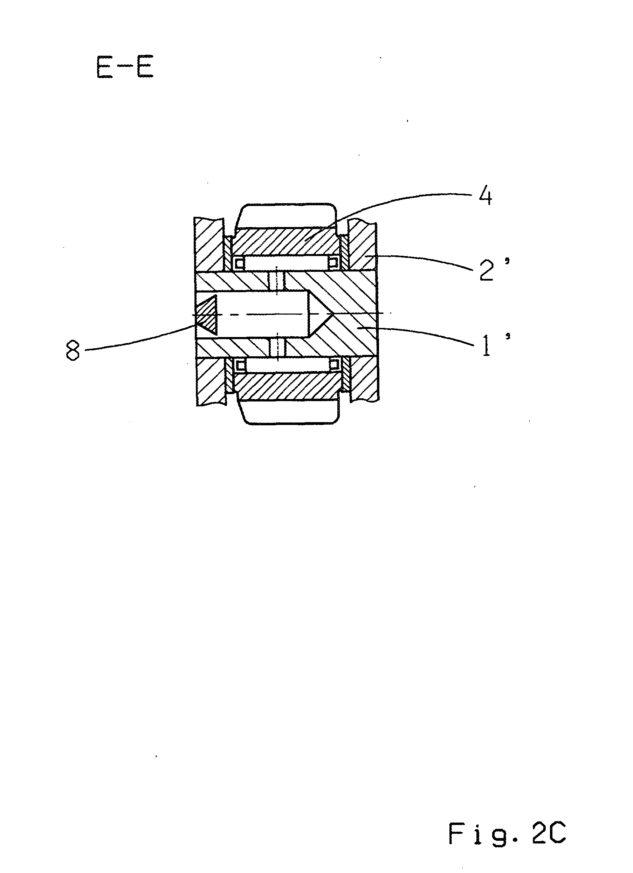

In den Figuren 2A-2C ist eine zweite, erfindungsgemäße Ausführungsform der Befestigungsanordnung zu sehen. Im Unterschied zu der im Vorfeld beschriebenen Variante findet in diesem Fall eine Platte 8 mit einem trapezförmigen Querschnitt Anwendung, die mit einer, an einem axialen Ende des Planetenradbolzens 1' ausgebildeten Nut 1.3 eine Schalbenschwanzverbindung ausbildet. Der trapezförmige Querschnitt geht hierbei insbesondere aus Fig.2C hervor, in welcher ein Längsschnitt der erfindungsgemäßen Befestigungsanordnung dargestellt ist. Die Platte 8 ragt dabei mit einem Ende 8.1 in eine hierzu korrespondierende Tasche 2.3' des Planetenträgers 2' und unterbindet darüber erneut eine axiale Bewegung in eine Richtung, sowie eine Verdrehung des Planetenradbolzens 1' relativ zum Planetenträger 2'. Mittels der Schwalbenschwanzverbindung kann diese Sicherung des Planetenradbolzens 1' an das axiale Ende des Planetenradbolzens 1' verschoben werden, wodurch sich auch die, im Planetenträger 2' auszubildende Tasche 2.3' in axialer Richtung deutlich verkürzt.

Durch die der erfindungsgemäße Befestigungsanordnung kann eine Sicherung des Planetenradbolzens sehr platzsparend und gleichzeitig mit niedriger Beeinträchtigung der Steifigkeiten von Planetenträger und Planetenradbolzen erfolgen. Des Weiteren kann eine derartige Sicherung mit niedrigem Herstellungsaufwand bewerkstelligt werden.

### Bezugszeichen

- 1,1': Planetenradbolzen
- 1.1: Schmierbohrung
- 1.2: Querbohrung
- 1.3: Nut
- 2, 2': Planetenträger
- 2.1: Durchgangsbohrung
- 2.2: Hinterhakungsmöglichkeit
- 2.3, 2.3': Tasche
- 3: Lagerung
- 4: Planetenrad
- 5A, 5B: Anlaufscheiben
- 6: Ölfangblech
- 6.1: oberes Ende
- 6.2: radialer Abschnitt
- 6.3: Schenkel
- 7: Spannhülse
- 7.1: Hülsenende
- 8: Platte
- 8.1: Plattenende

## Patentansprüche

1. Befestigungsanordnung eines Planetenradbolzens (1') eines Planetengetriebes, welcher durch eine Durchgangsbohrung (2.1) in einem Planetenträger (2') hindurchgeführt ist und auf einem Außendurchmesser eine Lagerung (3) eines Planetenrades (4) trägt, wobei der Planetenradbolzen (1') im Planetenträger (2') zum Einen durch ein Haltemittel und zum Anderen über ein gemeinsam mit dem Planetenträger (2') rotierendes Bauteil gegen axiale Verschiebung und Verdrehung relativ zum Planetenträger (2') gesichert ist, wobei das Haltemittel durch ein längliches Sicherungselement gebildet ist, welches in einer, in Querrichtung ausgebildeten Ausnehmung des Planetenradbolzens (1') platziert ist und mit zumindest einem Ende in eine je korrespondierende Tasche (2.3') des Planetenträgers (2') ragt, **dadurch gekennzeichnet, dass** die Ausnehmung eine, an einem axialen Ende des Planetenradbolzens (1') ausgebildete Nut (1.3) ist, wobei das hierin platzierte, längliche Sicherungselement eine Platte (8) mit einem trapezförmigen Querschnitt ist, die mit der Nut (1.3) eine Schwalbenschwanzverbindung ausbildet.

2. Befestigungsanordnung nach Anspruch 1, **dadurch gekennzeichnet, dass** die Tasche (2.3') des Planetenträgers (2') an einer Stelle des Umfangs der Durchgangsbohrung (2.1) vorgesehen ist, an welcher eine Belastung des Planetenträgers (2') am geringsten ist.

3. Befestigungsanordnung nach einem der vorhergehenden Ansprüche, **dadurch gekennzeichnet, dass** das gemeinsam mit dem Planetenträger (2') rotierende Bauteil ein, im Bereich des Planetenradbolzen (1') vorgesehenes Ölfangblech (6) ist.

4. Planetengetriebe für ein Automatikgetriebe, bei welchem Planetenräder (4) führende Planetenradbolzen (1') jeweils mit einer Befestigungsanordnung nach einem der Ansprüche 1 bis 3 in einem Planetenträger (2') gesichert sind.

## Claims

1. Fastening arrangement of a planetary-gear pin (1') of a planetary gear mechanism, which planetary-gear pin (1') is guided through a through hole (2.1) in a planetary carrier (2') and supports a bearing (3) of a planetary gear (4) on an external diameter, the planetary-gear pin (1') being secured in the planetary carrier (2') against axial displacement and rotation relative to the planetary carrier (2') firstly by a holding means and secondly via a component which rotates together with the planetary carrier (2'), the holding means being formed by an elongate securing element which is positioned in a recess, formed in the transverse direction, of the planetary-gear pin (1') and protrudes with at least one end in each case into a corresponding pocket (2.3') of the planetary carrier (2'), **characterized in that** the recess is a groove (1.3) which is formed at an axial end of the planetary-gear pin (1'), the elongate securing element which is positioned herein being a plate (8) which has a trapezoidal cross section and forms a dovetail connection with the groove (1.3).

2. Fastening arrangement according to Claim 1, **characterized in that** the pocket (2.3') of the planetary carrier (2') is provided at a location of the circumference of the through hole (2.1), at which a loading of the planetary carrier (2') is lowest.

3. Fastening arrangement according to one of the preceding claims, **characterized in that** the component which rotates together with the planetary carrier (2') is an oil baffle plate (6) which is provided in the region of the planetary-gear pin (1').

4. Planetary gear mechanism for an automatic gearbox, in which planetary gear mechanism planetary-gear pins (1') which guide planetary gears (4) are secured in a planetary carrier (2') in each case by way of a fastening arrangement according to one of Claims 1 to 3.

## Revendications

1. Ensemble de fixation d'un axe de satellite (1') d'un engrenage planétaire, qui est guidé à travers un alésage traversant (2.1) dans un porte-satellites (2') et qui porte, sur un diamètre extérieur, un support sur palier (3) d'un pignon planétaire (4), l'axe de satellite (1') dans le porte-satellites (2') étant fixé d'une part par un moyen de retenue et d'autre part par le biais d'un composant tournant conjointement avec le porte-satellites (2') contre un déplacement axial et une rotation par rapport au porte-satellites (2'), le moyen de retenue étant formé par un élément de fixation allongé qui est placé dans un évidement de l'axe de satellite (1') réalisé dans la direction transversale et qui fait saillie par au moins une extrémité dans une cavité correspondante respective (2.3') du porte-satellites (2'), **caractérisé en ce que** l'évidement est une rainure (1.3) réalisée à une extrémité axiale de l'axe de satellite (1'), l'élément de fixation allongé placé dans celle-ci étant une plaque (8) de section transversale trapézoïdale qui constitue une connexion en queue d'aronde avec la rainure (1.3).

2. Ensemble de fixation selon la revendication 1, **caractérisé en ce que** la cavité (2.3') du porte-satellites (2') est prévue à un endroit de la périphérie de l'alésage traversant (2.1) au niveau duquel une contrainte du porte-satellites (2') est minimale.

3. Ensemble de fixation selon l'une quelconque des revendications précédentes, **caractérisé en ce que** le composant tournant conjointement avec le porte-satellites (2') est une tôle de réception d'huile (6) prévue dans la région de l'axe de satellite (1').

4. Engrenage planétaire pour une boîte de vitesses automatique, dans lequel des axes de satellite (1') guidant des pignons planétaires (4) sont à chaque fois fixés avec un ensemble de fixation selon l'une quelconque des revendications 1 à 3 dans un porte-satellites (2').
